# EUROPÄISCHE PATENTSCHRIFT

(11) **EP 0 670 286 B1**
(45) Veröffentlichungstag und Bekanntmachung des Hinweises auf die Patenterteilung: **19.05.1999**
(21) Anmeldenummer: 95102637.6
(22) Anmeldetag: 24.02.1995
(51) Int. Cl.: C01B 13/18, C01G 1/02, B01J 20/02

(54) **Mesoporöse Molekularsiebe**
Mesoporous molecular sieves
Tamis moléculaires mésoporeux

(30) Priorität: 04.03.1994 DE 4407326
(43) Veröffentlichungstag der Anmeldung: 06.09.1995
(73) Patentinhaber: BASF AKTIENGESELLSCHAFT, 67056 Ludwigshafen (DE)
(72) Erfinder: Müller, Ulrich, Dr., D-67434 Neustadt (DE); Bayer, Sabine, D-67590 Monsheim (DE); Oetter, Günter, Dr., D-67227 Frankenthal (DE); Gehrer, Eugen, Dr., D-67069 Ludwigshafen (DE); Ciesla, Ulrike, D-55118 Mainz (DE); Schueth, Ferdi, Dr., D-55118 Mainz (DE); Monnier, Alain, Dr., F-01630 Sergy (FR); Unger, Klaus, Prof. Dr., D-64342 Seeheim-Jugenheim (DE); Stucky, Galen D., Prof. Dr., Santa Barbara, CA 93111 (US)

(56) Entgegenhaltungen:
- EP-A- 0 131 925
- WO-A-91/11390
- CHEMICAL ABSTRACTS, vol. 114, no. 24, 17.Juni 1991 Columbus, Ohio, US; abstract no. 231496e,

## Beschreibung

Die vorliegende Erfindung betrifft mesoporöse Molekularsiebe, die aus anionischen Tensiden und Isopoly- oder Heteropolykationen von Metalloxiden der Gruppen IIIa, IIb, IIIb, IVb, Vb, VIb, VIIb des Periodensystems der Elemente, Be, Sn, Pb, Bi, Cu, Fe, Co, Ni, Ce, Th, U erhältlich sind.

Aus der WO-A-91/11390 sind mesoporöse Molekularsiebe mit einer den Silikaten und Alumosilikaten verwandten chemischen Zusammensetzungs bekannt. Die Synthese dieser Materialien mit der Bezeichnung MCM-41 erfolgt durch Umsetzung von Metallsalzen mit kationischen Tensiden wie etwa Hexadecyltrimethylammonium in Form flüssigkristalliner Anordnungen wie Schablonen bei der Kondensation des Silikatgerüstes.

Der Vorteil dieser Stoffe ergibt sich aus einer Kombination aus hoher Festkörperoberfläche, großem Porenvolumen und einer regelmäßigen Anordnung des Silikat- oder Alumosilikatgerüstes zu Poren im Bereich der Mesoporen von ca. 1,5 bis ca. 10 nm. Damit liegen regelmäßig strukturierte Porenöffnungsweiten vor, die deutlich größer sind als diejenigen von beispielsweise bekannten Zeolithen oder zeolithanalogen Alumophosphaten (Atlas of Zeolite Structure Types, Butterworths, 1978 und J. Am. Chem. Soc. 114 (1992) 10834 bis 10843 sowie die dort angegebene Literatur).

Als Anwendungen der mesoporöse Molekularsiebe nennt WO-A-91/11390 die katalytische Umwandlung von Kohlenwasserstoffen in Crack- oder Hydrocrackreaktionen und in der Umwandlung von Stickoxiden, sowie zur selektiven Adsorption von Komponenten aus Mischungen.

Nachteilig erscheint, daß man bei der Zusammensetzung dieser neuartigen Materialien auf Silikat und Alumosilikat beschränkt bleibt. Zudem wird die von Zeolithen bekannte hohe Acidität nicht erreicht, so daß eine Verwendung in der sauren Heterogenkatalyse fraglich erscheint.

Der vorliegenden Erfindung lag daher die Aufgabe zugrunde, den zuvorgenannten Nachteilen abzuhelfen.

Demgemäß wurden neue und verbesserte mesoporöse Molekularsiebe, hergestellt aus anionischen Tensiden und Isopoly- oder Heteropolykationen von Metalloxiden der Gruppen IIIa, IIb, IIIb, IVb, Vb, VIb, VIIb des Periodensystems der Elemente, Be, Sn, Pb, Bi, Cu, Fe, Co, Ni, Ce, Th, U gefunden.

Im Gegensatz zu MCM-41 - in dem kationische Tenside ein Festkörper-Anionengitter bewirken - wird eine sehr viel breitere Variabilität erreicht, wenn man anionische Tenside z.B. in wäßrigen oder alkoholischen Systemen einsetzt, um damit Festkörper-Kationengitter zu erhalten.

Man kann die anionischen Tenside oder deren Salze bei Temperaturen von 20 bis 180°C, bevorzugt 40 bis 90°C in wäßrigen oder alkoholischen (C₁- bis C₈-Alkanole, bevorzugt C₁- bis C₄-Alkanole, besonders bevorzugt Methanol und Ethanol) Lösungen, bevorzugt den wäßrigen Lösungen oberhalb ihrer kritischen Mizellkonzentration (M. Hoffmann, H. Kröner, R. Kuhn, Polymeranalytik II, S. 266 bis 267, Thieme Verlag, Stuttgart, 1977) vorlegen, wobei sich in der Regel selbstorganisierte Spezies, beispielsweise Mizellen ausbilden und diese mithin als Schablone zur Strukturierung dienen.

Erfindungsgemäß kann man die folgenden Elemente IIIa, IIb, IIIb, IVb, Vb, VIb, VIIb des Periodensystems der Elemente, Be, Sn, Pb, Bi, Cu, Fe, Co, Ni, Ce, Th, U, bevorzugt Be, B, Al, Ga, In, Sn, Pb, Sc, Y, La, Ti, Zr, Hf, V, Nb, Ta, Cr, Mo, W, Mn, Fe, Co, Ni, Cu, Zn, Cd, Hg, Ce, Th, U, besonders bevorzugt Be, B, Al, Ga, In, Sn, Pb, Ti, Zr, Hf, V, Nb, Ta, Cr, Mo, W, Mn, Fe, Co, Ni, Cu, Zn, Cd, Hg, Ce zugeben. Zur Herstellung der Isopoly- oder Heteropolykationen dieser Elemente eignen sich deren Sulfate, Phosphate, Nitrate, Carbonate, Halogenide und Perchlorate, bevorzugt Sulfate, Phosphate und Nitrate, besonders bevorzugt Sulfate und Nitrate.

Als Vorstufen können auch hydrolysierbare Komponenten, wie etwa Alkoholate, Chelate, Carboxylate der vorgenannten Elemente eingesetzt werden.

Bei der Herstellung der mesopörösen Molekularsiebe ist es wichtig, beim Lösen der Ausgangsverbindungen einen Bereich des pH-Werts einzuhalten, von dem bekannt ist, daß dort die Bildung von Isopoly- oder Heteroisopolykationen begünstigt ist [Chemie in unserer Zeit, 13 (1979) 184 bis 194; The hydrolysis of cations, Wiley (1976)]. Beispiele dafür sind etwa pH 3 bis 6 für Zirkonium-Isopolykationen, pH 4 bis 12 für Wismut-Isopolykationen oder pH 3 bis 6 für Eisen-Isopolykationen. Diese Bereiche können sich, da es sich prinzipiell um Hydrolysegleichgewichte handelt, als Folge der Konzentration verschieben. Experimentell lassen sich solche bevorzugten Bereiche durch Titrationen und Messung der elektrischen Leitfähigkeiten oder durch Messung der Färbung der Lösung verfolgen.

Die Kristallisation der erfindungsgemäßen Oxide kann in der Regel bei Temperaturen von 20 bis 250°C, bevorzugt 50 bis 150°C, besonders bevorzugt 70 bis 120°C durchgefühft werden. Je nach dem sich einstellenden Dampfdruck kann es vorteilhaft sein, insbesondere bei Temperaturen oberhalb von 90°C Druckreaktionsbehälter zu verwenden.

Die Dauer der Kristallisation kann zwischen wenigen Minuten bis zu mehreren Tagen betragen, bevorzugt je nach Temperatur und Konzentration an Einsatzstoffen jedoch im Bereich von 12 bis 96 Stunden.

Nach der Kristallisation können die entstandenen Produkte noch erhebliche Mengen an Tensid enthalten. Zur Entfernung können die aus der Zeolith-Synthese bekannten Verfahrensweisen der thermischen Zersetzung oder des Extrahierens mit Lösemitteln oder der Behandlung mit Wasserdampf bei erhöhter Temperatur eingesetzt werden. Thermoanalytische Messungen an kleinen Probenmengen können als Vortest dienen, um die Temperaturen so zu wählen, daß zwar das Tensid entfernt aber die Oxidstruktur durch die thermische Behandlung nicht geschädigt wird.

Die temperaturbehandelten Proben können als Katalysatoren oder Katalysatorträger in verformter oder nichtverformter Gestalt eingesetzt werden. Dabei können an sich bekannte Bindemittel wie Tone, Siliziumdioxid, Titandioxid, Aluminiumoxid, Graphit oder Zirkondioxid verwendet werden.

Als anionische Tenside (Ullmanns Encyklopädie der Technischen Chemie, 4. Auflage, Band 22, Seiten 467 bis 500) eignen sich Verbindungen der allgemeinen Formel I R - X in der X für COO⁻Y⁺, OSO₃⁻Y⁺, SO₃⁻Y⁺, OPO₃⁻Y⁺, PO₃⁻Y⁺, COOH, SO₄, SO₃, PO₄ oder PO₃, Y für ein Element der Gruppe Ia des Periodensystems der Elemente wie Lithium, Natrium, Kalium, Rubidium, Cäsium oder Francium, bevorzugt Lithium, Natrium oder Kalium, besonders bevorzugt Natrium oder Kalium steht und R für R¹, (CH₂)ₙ⁻R² oder CHR³R⁴ steht, wobei R¹ C₆- bis C₆₀-Alkyl, bevorzugt C₈- bis C₅₀-Alkyl, besonders bevorzugt C₉- bis C₄₅-Alkyl, R² NR⁵-CO-R¹, NR⁵-SO₂-CHR¹R¹, OR¹, SR¹, SO₂-R¹, OOC-R¹, C₇- bis C₆₀-Alkylaryl, bevorzugt C₁₀- bis C₅₀-Alkylaryl, besonders bevorzugt C₁₂- bis C₄₅-Alkylaryl oder C₇- bis C₆₀-Alkylaryloxy, bevorzugt C₁₀- bis C₅₀-Alkylaryloxy, besonders bevorzugt C₁₂- bis C₄₅-Alkylaryloxy und R³ und R⁴ unabhängig voneinander C₆- bis C₆₀-Alkyl, bevorzugt C₈- bis C₅₀-Alkyl, besonders bevorzugt C₉- bis C₄₅-Alkyl, COOR¹ oder CH₂-COOR¹ und R⁵ Wasserstoff oder C₁- bis C₄-Alkyl, bevorzugt Methyl oder Ethyl, besonders bevorzugt Methyl bedeuten.

Als anionische Tenside seien beispielhaft Carboxylate, wie carboxymethylierte Oxethylate oder Derivate von Aminosäuren, Sulfonate, wie Ligninsulfonate, Alkylbenzolsulfonate, Alkylnaphthalinsulfonate, Alkylsulfonate, Olefinsulfonate, Sulfofettsäureester, Sulfofettsäureamide, Sulfobernsteinsäureester, Alkoxyalkylsulfonate, Acyloxyalkylsulfonate oder Acylaminoalkylsulfonate, Sulfate, wie Alkylsulfate oder Ethersulfate, Phosphonate oder Phosphate genannt.

Die erfindungsgemäßen mesoporösen Molekularsiebe eignen sich als Katalysatoren für Oxyfunktionalisierungen von Kohlenwasserstoffen, Oxidationen von Olefinen zu Oxiranen, Aromaten zu Hydroxyaromaten, Alkanen zu Alkoholen, Alkoholen zu Aldehyden, sekundären Alkoholen zu Ketonen durchgeführt werden. Ebenso kommen Hydrierungen und Dehydrierungen, Polymerisationsreaktionen, Aminierungen, Hydratisierungen und Dehydratisierungen, nukleophile und elektrophile Substitutionsreaktionen, Additions- und Eliminationsreaktionen, Doppelbindungs- und Skelettisomerisierungen, Dehydrocyclisierungen, Hydroxylierungen von Heteroaromaten, Epoxidierungen, Epoxid-Aldehydumlagerungen, sowie Kondensationsreaktionen wie Aldolkondensationen in Betracht.

Je nach Molekül kann die Umsetzung in Gas- oder Flüssigphase bei Temperaturen von 20 bis 400°C, bevorzugt 50 bis 350°C, besonders bevorzugt 100 bis 300°C und Drücken von 0,001 bis 200 bar, bevorzugt 0,01 bis 100 bar, besonders bevorzugt 0,1 bis 50 bar erfolgen.

Desaktivierte Katalysatoren aus den erfindungsgemäßen mesoporösen Molekularsieben können durch kontrolliertes Abbrennen von Kohlenstoffbelegungen wieder in eine katalytisch aktive Form zurückgeführt werden.

Aufgrund der entstehenden hohen Oberflächen von 100 bis 1500 m²/g, bevorzugt 300 bis 1000 m²/g, besonders bevorzugt 450 bis 800 m²/g der erfindungsgemäßen mesoporösen Molekularsiebe ist es ratsam beim Umgang mit diesen mesoporösen Molekularsieben dafür Sorge zu tragen, daß pyrophores Verhalten verhindert wird, beispielsweise durch Inertisierung mit einem geeigneten Gas oder Lösemittel.

Die erfindungsgemäßen mesoporösen Molekularsiebe eignen sich als Katalysatoren, als Trägermaterialien für Katalysatoren, als Einsatzstoffe zur Herstellung von Oxidkeramiken, als Sorbentien, als Pigment, in elektronischen, optischen oder elektrooptischen Bauteilen, Schaltelementen oder Sensoren und in Membranen und/oder zur Stofftrennung.

### Beispiele

### Beispiel 1

### Herstellung eines Eisenoxidkatalysators

Eine frisch hergestellte Lösung von 2 g (10 mmol) Eisenchloridpentahydrat mit einem pH-Wert von 3 wurde zu einer Suspension eines anionischen Tensids auf der Basis des Natriumsalzes der Hexadecylsulfonsäure 1 g (3,04 mmol) in 25 g deionisiertem Wasser zugesetzt. Durch Zugabe wäßriger Ammoniaklösung (25 Gew.-% Ammoniak) wurde der pH-Wert auf 6 eingestellt. Diese Mischung wurde innerhalb von 48 Stunden bei Raumtemperatur zur Reaktion gebracht.

Der entstandene gelbbraune Festkörper wurde abfiltriert, mit deionisiertem Wasser gewaschen und an der Luft getrocknet.

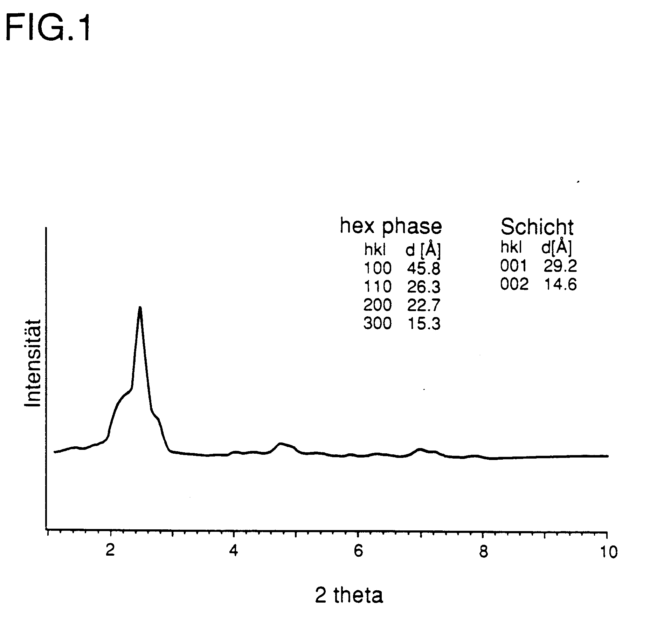

Das entstandene Produkt zeigt das in Fig.1 angegebene Röntgendiffraktogramm mit einem Reflex bei 3,75 nm (100-Reflex). Eine thermoanalytische Messung ergibt für das Produkt einen Gehalt an Hexadecylsulfonat von mindestens 80 Gew.-%. Dies korrespondiert zu einem molaren Verhältnis von FeO zum Tensid von 2 : 1.

### Beispiel 2

### Herstellung eines Bleioxidkatalysators

Eine Lösung von 3,5 g (10,6 mmol) Bleinitrat in 20 g deionisiertem Wasser wurde durch Zugabe von 0,1 molarer NaOH-Lösung auf einen pH-Wert von 7 bis 8 eingestellt.

Die so hergestellte Lösung wurde versetzt mit einer Suspension aus 0,55 g (1,67 mmol) des Natriumsalzes der Hexadecylsulfonsäure in 20 g deionisiertem Wasser. Die entstandene Mischung wurde für die Dauer von 30 Minuten homgenisiert. Anschließend wurde diese Mischung bei 90°C innerhalb von 72 Stunden zur Reaktion gebracht.

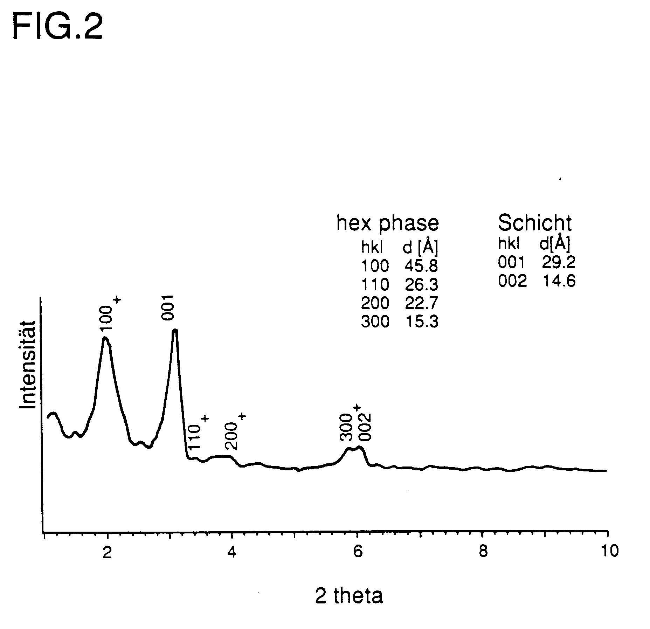

Das entstandene Produkt zeigt das in Fig.2 angegebene Röntgendiffraktogramm mit einem Reflex bei 4.58 nm entsprechend einer hexagonal indizierten Einheitszelle von 5.29 nm (2d₁₀₀/3^{0.5}). Zusätzlich wurde hierbei auch eine geringe Menge einer lamellaren Phase mit einem (100)-Reflex von 2.92 nm beobachtet.

Aus thermoanalytischen Untersuchungen des Produktes wurde ein molares Verhältnis von PbO zum Tensid von 6 : 1 gefunden.

## Patentansprüche

1. Mesoporöse Molekularsiebe, hergestellt aus anionischen Tensiden und Isopoly- oder Heteropolykationen von Metalloxiden der Gruppen IIIa, IIb, IIIb, IVb, Vb, VIb, VIIb des Periodensystems der Elemente, Be, Sn, Pb, Bi, Cu, Fe, Co, Ni, Ce, Th, U.

2. Mesoporöse Molekularsiebe nach Anspruch 1, dadurch gekennzeichnet, daß man Mischungen aus anionischen Tensiden und Isopoly- oder Heteropolykationen der Metalloxiden bei Temperaturen von 20 bis 250°C und Drücken von 0,01 bis 50 bar kristallisiert.

3. Mesoporöse Molekularsiebe nach Anspruch 1, dadurch gekennzeichnet, daß man Mischungen aus anionischen Tensiden und Isopoly- oder Heteropolykationen der Metalloxiden bei Temperaturen von 50 bis 150°C und Drücken von 0,1 bis 5 bar kristallisiert.

4. Mesoporöse Molekularsiebe nach Anspruch 1, dadurch gekennzeichnet, daß man Mischungen aus anionischen Tensiden und Isopoly- oder Heteropolykationen der Metalloxiden bei Temperaturen von 70 bis 120°C und Drücken von 0,4 bis 3 bar kristallisiert.

5. Mesoporöse Molekularsiebe nach Anspruch 1, dadurch gekennzeichnet, daß man Mischungen aus anionischen Tensiden und Isopoly- oder Heteropolykationen der Metalloxiden in wässrigen Systemen kristallisiert.

6. Mesoporöse Molekularsiebe nach Anspruch 1, dadurch gekennzeichnet, daß man als Metalle in den Isopoly- oder Heteropolykationen der Metalloxide Be, B, Al, Ga, In, Sn, Pb, Bi, Sc, Y, La, Ti, Zr, Hf, V, Nb, Ta, Cr, Mo, W, Mn, Fe, Co, Ni, Cu, Zn, Cd, Hg, Ce, Th, U einsetzt.

7. Mesoporöse Molekularsiebe nach Anspruch 1, dadurch gekennzeichnet, daß man als Metalle in den Isopoly- oder Heteropolykationen der Metalloxide Be, B, Al, Ga, In, Sn, Pb, Bi, Ti, Zr, Hf, V, Nb, Ta, Cr, Mo, W, Mn, Fe, Co, Ni, Cu, Zn, Cd, Hg, Ce einsetzt.

8. Mesoporöse Molekularsiebe nach Anspruch 1, dadurch gekennzeichnet, daß man als anionische Tenside Verbindungen der allgemeinen Formel I
R - X (I),
in der
X COO⁻Y⁺, OSO₃⁻Y⁺, SO₃⁻Y⁺, OPO₃⁻Y⁺, PO₃⁻Y⁺, COOH, SO₄, SO₃, PO₄ oder PO₃,
Y ein Element der Gruppe Ia des Periodensystems der Elemente
R R¹, (CH₂)ₙ-R² oder CHR³R⁴,
R¹ C₆- bis C₆₀-Alkyl,
R² NR⁵-CO-R¹, NR⁵-SO₂-CHR¹R¹, OR¹, SR¹, SO₂-R¹, OOC-R¹, C₇- bis C₆₀-Alkylaryl, oder C₇- bis C₆₀-Alkylaryloxy,
R³, R⁴ unabhängig voneinander C₆- bis C₆₀-Alkyl, COOR¹ oder CH₂-COOR¹ und
R⁵ Wasserstoff oder C₁- bis C₄-Alkyl bedeuten,
einsetzt.

9. Mesoporöse Molekularsiebe nach Anspruch 1, mit aus Beugungsaufnahmen ermittelten d-Werten einer indizierten hexagonalen Einheitszelle von mindestens 5.29 nm für Reflexe 2d₁₀₀/3^{0.5}.

10. Mesoporöse Molekularsiebe nach Anspruch 1, mit aus Beugungsaufnahmen ermittelten d-Werten als Schichtebenenabstand von mindestens 1.8 nm.

## Claims

1. A mesoporous molecular sieve, prepared from anionic surfactants and isopoly or heteropoly cations of metal oxides of groups IIIa, IIb, IIIb, IVb, Vb, VIb and VIIb of the Periodic Table of Elements, Be, Sn, Pb, Bi, Cu, Fe, Co, Ni, Ce, Th and U.

2. A mesoporous molecular sieve as claimed in claim 1, wherein a mixture of anionic surfactants and isopoly or heteropoly cations of the metal oxides is crystallized at from 20 to 250°C and from 0.01 to 50 bar.

3. A mesoporous molecular sieve as claimed in claim 1, wherein a mixture of anionic surfactants and isopoly or heteropoly cations of the metal oxides is crystallized at from 50 to 150°C and from 0.1 to 5 bar.

4. A mesoporous molecular sieve as claimed in claim 1, wherein a mixture of anionic surfactants and isopoly or heteropoly cations of the metal oxides is crystallized at from 70 to 120°C and from 0.4 to 3 bar.

5. A mesoporous molecular sieve as claimed in claim 1, wherein a mixture of anionic surfactants and isopoly or heteropoly cations of the metal oxides is crystallized in an aqueous system.

6. A mesoporous molecular sieve as claimed in claim 1, wherein Be, B, Al, Ga, In, Sn, Pb, Bi, Sc, Y, La, Ti, Zr, Hf, V, Nb, Ta, Cr, Mo, W, Mn, Fe, Co, Ni, Cu, Zn, Cd, Hg, Ce, Th and U are used as metals in the isopoly or heteropoly cations of the metal oxides.

7. A mesoporous molecular sieve as claimed in claim 1, wherein Be, B, Al, Ga, In, Sn, Pb, Bi, Ti, Zr, Hf, V, Nb, Ta, Cr, Mo, W, Mn, Fe, Co, Ni, Cu, Zn, Cd, Hg and Ce are used as metals in the isopoly or heteropoly cations of the metal oxides.

8. A mesoporous molecular sieve as claimed in claim 1, wherein a compound of the formula I
R - X (I),
where
X is COO⁻Y⁺, OSO₃⁻Y⁺, SO₃⁻Y⁺, OPO₃⁻Y⁺, PO₃⁻Y⁺, COOH, SO₄, SO₃, PO₄ or PO₃,
Y is an element of group Ia of the Periodic Table of Elements,
R is R¹, (CH₂)ₙ-R² or CHR³R⁴,
R¹ is C₆-C₆₀-alkyl,
R² is NR⁵-CO-R¹, NR⁵-SO₂-CHR¹R¹, OR¹, SR¹, SO₂-R¹, OOC-R¹, C₇-C₆₀-alkylaryl or C₇-C₆₀-alkylaryloxy,
R³ and R⁴ independently of one another are C₆-C₆₀-alkyl, COOR¹ or CH₂-COOR¹ and
R⁵ is hydrogen or C₁-C₄-alkyl,
is used as the anionic surfactant.

9. A mesoporous molecular sieve as claimed in claim 1, having d values, determined from diffraction patterns, of an indexed hexagonal unit cell of at least 5.29 nm for reflections 2d₁₀₀/3^{0.5}.

10. A mesoporous molecular sieve as claimed in claim 1, having interplanar spacings d of at least 1.8 nm, determined from diffraction patterns.

## Revendications

1. Tamis moléculaire mésoporeux préparé à partir d'agents tensioactifs anioniques et d'isopoly- ou hétéropoly-cations des oxydes de métaux des groupes IIIa, IIb, IIIb, IVb, Vb, VIb, VIIb de la Classification Périodique des Eléments, de Be, Sn, Pb, Bi, Cu, Fe, Co, Ni, Ce, Th, U.

2. Tamis moléculaire mésoporeux salon la revendication 1, caractérisé par le fait que l'on fait cristalliser les mélanges tensio-actifs anioniques et d'isopoly- ou hétéropoly-cations des oxydes métalliques à des températures de 20 à 250°C et des pressions de 0,01 à 50 bar.

3. Tamis moléculaire mésoporeux selon la revendication 1, caractérisé par le fait que l'on fait cristalliser des mélanges d'agents tensioactifs anioniques et d'isopoly- ou hétéropoly-cations des oxydes métalliques à des températures de 50 à 150°C et des pressions de 0,1 à 5 bar.

4. Tamis moléculaires mésoporeux selon la revendication 1, caractérisé par le fait que l'on fait cristalliser des mélanges d'agents tensio-actifs anioniques et d'isopoly- ou hétéropoly-cations des oxydes métalliques à des températures de 70 à 120°C et des pressions de 0,4 à 3 bar.

5. Tamis moléculaire mésoporeux selon la revendication 1, caractérisé par le fait que l'on fait cristalliser des mélanges d'agents tensio-actifs anioniques et d'isopoly- ou hétéropoly-cations des oxydes métalliques dans des systèmes aqueux.

6. Tamis moléculaire mésoporeux selon la revendication 1, caractérisé par le fait que l'on utilise, en tant que métaux dans les isopoly- ou hétéropoly-cations, des oxydes métalliques Be, B, Al, Ga, In, Sn, Pb, Bi, Sc, Y, La, Ti, Zr, Hf, V, Nb, Ta, Cr, Mo, W, Mn, Fe, Co, Ni, Cu, Zn, Cd, Hg, Ce, Th, U.

7. Tamis moléculaire mésoporeux selon la revendication 1, caractérisé par le fait que l'on utilise, en tant que métaux dans les isopoly- ou hétéropoly-cations, des oxydes métalliques Be, B, Al, Ga, In, Sn, Pb, Bi, Ti, Zr, Hf, V, Nb, Ta, Cr, Mo, W, Mn, Fe, Co, Ni, Cu, Zn, Cd, Hg, Ce.

8. Tamis moléculaire mésoporeux selon la revendication 1, caractérisé par le fait que l'on utilise, en tant qu'agents tensio-actifs anioniques, des composés de formule générale I
R-X (I)
dans laquelle
X représente COO⁻Y⁺, OSO₃⁻Y⁺, SO₃⁻Y⁻, OPO₃⁻Y⁺, PO₃⁻Y⁺, COOH, SO₄, SO₃, PO₄ ou PO₃ ;
Y représente un élément du groupe Ia de la Classification Périodique des Eléments
R représente R¹, (CH2)ₙ-R² ou CHR³R⁴,
R¹ représente un groupe alkyle en C6-C60,
R² représente NR⁵-CO-R¹, NR⁵-SO₂-CHR¹R¹, OR¹, SR¹, SO₂-R¹, OOC-R¹, un groupe alkylaryle en C7-C60 ou alkylaryloxy en C7-C60,
R³ et R⁴ représentent chacun, indépendamment l'un de l'autre, un groupe alkyle en C6-C60, COOR¹ ou CH₂-COOR¹ et
R5 représente l'hydrogène ou un groupe alkyle en C1-C4.

9. Tamis moléculaire mésoporeux selon la revendication 1, avec, d'après les valeurs d déterminées sur les diagrammes de diffraction, une cellule unitaire hexagonale indiciée d'au moins 5,29 nm pour les angles de réflexion 2d₁₀₀/3^{0,5}.

10. Tamis moléculaire mésoporeux selon la revendication 1, avec, d'après les valeurs de d déterminées sur les diagrammes de diffraction, une distance entre plans lamellaires d'au moins 1,8 nm.
